# EUROPEAN PATENT APPLICATION

(11) **EP 2 384 924 A1**
(43) Date of publication of application: **09.11.2011**
(21) Application number: 11164676.6
(22) Date of filing: 03.05.2011
(51) Int. Cl.: B60L 11/00, B62M 6/45

(54) **Asynchronous wired-transmission electric drive system driven by human generating power**

(30) Priority: 03.05.2010 US 662767
(71) Applicant: Yang, Tai-Her, Si-Hu Town, Dzan-Hwa (TW)
(72) Inventor: Yang, Tai-Her, Si-Hu Town, Dzan-Hwa (TW)
(74) Representative: Wright, Howard Hugh Burnby

(57) **Abstract**

The present invention relates to an asynchronous wired-transmission electric drive system driven by human generating power. The electric drive system comprises: a human-driven input device (101), a generator (102) driven by the input device (101), a motor (104) driven by the electrical energy of the generator (102) and an electric control device (107). The motor (104) drives a load (105) and the drive system can further comprise a front transmission (103), a baterry (108), a rear transmission (106), a gearing (109) and a clutch device (110).

## Description

### BACKGROUND OF THE INVENTION

### (a) Field of the invention

The present invention relates to an asynchronous wired-transmission electric drive system driven by human generating power, which is driven by human power, the feature is a generator driven by human power, and the power generated by the generator is used for driving a motor to drive a load.

### (b) Description of the Prior Art

The conventional load with a drive motor is usually driven by human or an electric motor, in addition, there is also a load driven by human and equipped with an electric motor for auxiliary power, and the power source is usually from an external power source or the power storage device.

### SUMMARY OF THE INVENTION

The asynchronous wired-transmission electric drive system driven by human generating power is used for the load with a drive motor, which has a human-powered generator for driving the generator by human, then the power generated by the generator directly and asynchronously drives the motor, to drive and control the rotary speed, rotary direction, torque, voltage and current of the motor, or through the electronic control device to asynchronously drive and control the rotary speed, rotary direction, torque, voltage and current of the motor, for being applied to drive the load with a drive motor.

### BRIEF DESCRIPTION OF THE DRAWINGS

Fig.1 is a schematic view showing the main structural block of the asynchronous wired-transmission electric drive system driven by human generating power of the present invention;
Fig. 2 is a schematic view showing the structural block of an embodiment, in which an electronic control device (107) is installed to Fig.1;
Fig. 3 is a schematic view showing the structural block of an embodiment, in which the electronic control device (107) and a electric charging/discharging device (108) are installed to Fig.1;
Fig. 4 is a schematic view showing the structural block of an embodiment, in which a front transmission (103) is installed to Fig. 1;
Fig. 5 is a schematic view showing the structural block of an embodiment, in which the front transmission (103) is installed to Fig. 2;
Fig. 6 is a schematic view showing the structural block of an embodiment, in which the front transmission (103) is installed to Fig. 3;
Fig. 7 is a schematic view showing the structural block of an embodiment, in which a rear transmission (106) is installed to Fig. 1;
Fig. 8 is a schematic view showing the structural block of an embodiment, in which the rear transmission (106) is installed to Fig. 2;
Fig. 9 is a schematic view showing the structural block of an embodiment, in which the rear transmission (106) is installed to Fig. 3;
Fig. 10 is a schematic view showing the structural block of an embodiment, in which the front transmission (103) and the rear transmission (106) are installed to Fig. 1;
Fig. 11 is a schematic view showing the structural block of an embodiment, in which the front transmission (103) and the rear transmission (106) are installed to Fig. 2;
Fig. 12 is a schematic view showing the structural block of an embodiment, in which the front transmission (103) and the rear transmission (106) are installed to Fig. 3;
Fig. 13 is a schematic view showing the structural block of an embodiment, in which a gearing (109) is installed to Fig. 1;
Fig. 14 is a schematic view showing the structural block of an embodiment, in which the gearing (109) is installed to Fig. 2;
Fig. 15 is a schematic view showing the structural block of an embodiment, in which the gearing (109) is installed to Fig. 3;
Fig. 16 is a schematic view showing the structural block of an embodiment, in which the gearing (109) and the front transmission (103) are installed to Fig. 1;
Fig. 17 is a schematic view showing the structural block of an embodiment, in which the gearing (109) and the front transmission (103) are installed to Fig. 2;
Fig. 18 is a schematic view showing the structural block of an embodiment, in which the gearing (109) and the front transmission (103) are installed to Fig. 3;
Fig. 19 is a schematic view showing the structural block of an embodiment, in which the gearing (109) and the rear transmission (106) are installed in Fig. 1;
Fig. 20 is a schematic view showing the structural block of an embodiment, in which the gearing (109) and the rear transmission (106) are installed to Fig. 2;
Fig. 21 is a schematic view showing the structural block of an embodiment, in which the gearing (109) and the rear transmission (106) are installed to Fig. 3;
Fig. 22 is a schematic view showing the structural block of an embodiment, in which the gearing (109), the front transmission (103) and the rear transmission (106) are installed to Fig. 1;
Fig. 23 is a schematic view showing the structural block of an embodiment, in which the gearing (109), the front transmission (103) and the rear transmission (106) are installed to Fig. 2;
Fig. 24 is a schematic view showing the structural block of an embodiment, in which the gearing (109), the front transmission (103) and the rear transmission (106) are installed to Fig. 3;
Fig. 25 is a schematic view showing the structural block of an embodiment, in which a controllable clutch device (110) is installed to Fig. 13 to control a human-driven input device (101) to engage or disengage with the gearing (109);
Fig. 26 is a schematic view showing the structural block of an embodiment, in which the controllable clutch device (110) is installed to Fig. 14 to control the human-driven input device (101) to engage or disengage with the gearing (109);
Fig. 27 is a schematic view showing the structural block of an embodiment, in which the controllable clutch device (110) is installed to Fig. 15 to control the human-driven input device (101) to engage or disengage with the gearing (109);
Fig. 28 is a schematic view showing the structural block of an embodiment, in which the controllable clutch device (110) is installed to Fig. 16 to control the human-driven input device (101) to engage or disengage with the gearing (109);
Fig. 29 is a schematic view showing the structural block of an embodiment, in which the controllable clutch device (110) is installed to Fig. 17 to control the human-driven input device (101) to couple or disconnect with the gearing (109);
Fig. 30 is a schematic view showing the structural block of an embodiment, in which the controllable clutch device (110) is installed in Fig. 18 to control the human-driven input device (101) to engage or disengage with the gearing (109);
Fig. 31 is a schematic view showing the structural block of an embodiment, in which the controllable clutch device (110) is installed to Fig. 19 to control the human-driven input device (101) to engage or disengage with the gearing (109);
Fig. 32 is a schematic view showing the structural block of an embodiment, in which the controllable clutch device (110) is installed to Fig. 20 to control the human-driven input device (101) to engage or disengage with the gearing (109);
Fig. 33 is a schematic view showing the structural block of an embodiment, in which the controllable clutch device (110) is installed to Fig. 21 to control the human-driven input device (101) to engage or disengage with the gearing (109);
Fig. 34 is a schematic view showing the structural block of an embodiment, in which the controllable clutch device (110) is installed to Fig. 22 to control the human-driven input device (101) to engage or disengage with the gearing (109);
Fig. 35 is a schematic view showing the structural block of an embodiment, in which the controllable clutch device (110) is installed to Fig. 23 to control the human-driven input device (101) to engage or disengage with the gearing (109); and
Fig. 36 is a schematic view showing the structural block of an embodiment, in which the controllable clutch device (110) is installed to Fig. 24 to control the human-driven input device (101) to engage or disengage with the gearing (109).

### DESCRIPTION OF MAIN COMPONENT SYMBOLS

- 101:: Human-driven input device
- 102:: Generator
- 103:: Front transmission unit
- 104:: Motor
- 105:: Load
- 106:: Rear transmission unit
- 107:: Electronic control device
- 108:: Charging/discharging device
- 109:: Gearing
- 110:: Controllable clutch device

### DETAILED DESCRIPTION OF THE PREFERRED EMBODIMENTS

An asynchronous wired-transmission electric drive system driven by human generating power, which is through a generator pedaled by human power to convert the physical energy into the kinetic energy, and the power generated by the generator asynchronously drives a motor, so as to convert the electric power into the rotary kinetic energy to drive a load.

The conventional load with a drive motor is usually driven by human or an electric motor, in addition, there is also a load driven by human and equipped with an electric motor for auxiliary power, and the power source is usually from an external power source or power storage device.

The present invention relates to an asynchronous wired-transmission electric drive system driven by human generating power, which is driven by human power, the feature is a generator driven by human power, and the power generated by the generator is used for driving a motor to drive a load.

The asynchronous wired-transmission electric drive system driven by human generating power is used for the load with a drive motor, which has a human-powered generator for driving the generator by human power, then the power generated by the generator directly and asynchronously drives the motor, to drive and control the rotary speed, rotary direction, torque, voltage and current of the motor, or through the electronic control device to asynchronously drive and control the rotary speed, rotary direction, torque, voltage and current of the motor, for driving the load with a drive motor; the main components including:
-- human-driven input device (101): driven by human limbs to produce rotary kinetic energy, to directly drive a generator (102), or to drive the generator (102) through variable speed transmission;
-- generator (102): constituted by the AC or DC generator, which is driven by the rotary kinetic energy of the human-driven input device (101) to produce and output electric energy; and
-- motor (104): constituted by the AC or DC motor, which is asynchronously driven by the electric energy of the generator (102), so as to produce and output the rotary mechanical energy to directly drive a load (105), or to drive the load (105) through variable speed transmission;
the relationship between the input rotary speed of the generator (102) and the asynchronous output rotary speed of the motor (104) includes directly matching through the features of voltage, current, rotary speed and torque of the both, or through the electronic control device installed between the power output terminal of the generator (102) and the power input terminal of the motor (104) to control the generated power of the generator and/or control the input power of the motor (104), therefore to control the rotary speed of the motor.

In the asynchronous wired-transmission electric drive system driven by human generating power, the power control functions of the generator (102) to the motor (104) includes:
1) the power generated by the generator (102) drives the motor (104), in which when the motor (104) is activated, the regenerated power is prevented from feedback to the generator through the restriction of one-way conductive circuit device, such as diodes or thyristors, or through the switch operation; and/or
2) the power generated by the generator (102) drives the motor (104), in which when the motor (104) is activated, the regenerated power reversely drives the generator (102), so as to allow the generator produces the functional operation of the motor.

In the asynchronous wired-transmission electric drive system driven by human generating power, the electric power generation and operational features of the generator (102) to the motor (104) includes one or more of the followings, including:
1) the electric power of the DC generator directly and asynchronously drives the DC motor; and/or
2) the electric power of the DC generator asynchronously drives the AC motor through an inverter; and/or
3) the electric power of the AC generator directly and asynchronously drives the AC motor; and/or
4) the electric power of the AC generator asynchronously drives the DC motor through an inverter; and/or
5) the rotary direction of the generator and that of the motor are in same rotary direction; and/or
6) the rotary direction of the generator and that of the motor are in different rotary directions; and/or
7) the rotary direction of the motor is constant and is irrelevant to that of the generator; and/or
8) the rotary direction of the motor is controlled by the electronic control device, and is irrelevant to that of the generator.

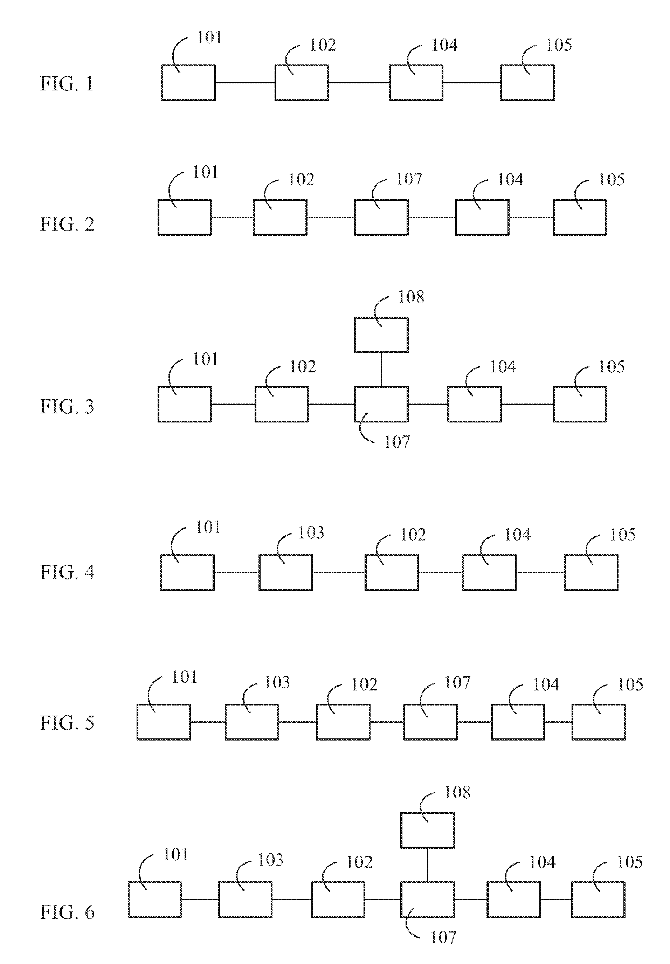

Fig.1 is a schematic view showing the main structural block of the asynchronous wired-transmission electric drive system driven by human generating power of the present invention; as shown in Fig. 1, the main components including:
-- human-driven input device (101): driven by human limbs to produce rotary kinetic energy, to directly drive the generator (102), or to drive the generator (102) through variable speed transmission;
-- generator (102): constituted by the AC or DC generator, which is driven by the rotary kinetic energy of the human-driven input device (101) to produce and output electric energy; and
-- motor (104): constituted by the AC or DC motor, which is asynchronously driven by the electric energy of the generator (102), so as to produce and output rotary mechanical energy to directly drive the load (105), or to drive the load (105) through variable speed transmission;
the relationship between the input rotary speed of the generator (102) and the asynchronous output rotary speed of the motor (104) includes directly matching through the features of voltage, current, rotary speed and torque of the both, or through the electronic control device installed between the power output terminal of the generator (102) and the power input terminal of the motor (104) to control the generated power of the generator and/or control the input power of the motor (104), therefore to control the rotary speed of the motor.

For the asynchronous wired-transmission electric drive system driven by human generating power, the electronic control device (107) is further installed between the human-driven input device (101) and the motor (104).

Fig. 2 is a schematic view showing the structural block of an embodiment, in which the electronic control device (107) is installed to Fig.1; in which:
the electronic control device (107) is constituted by electromechanical components and/or solid state electronic components and/or the microprocessor with related operating software, to regulate the voltage and current transmitted to the motor (104) from the generator (102), and/or to control the voltage and current input the motor (104), so as to control the rotary speed, torque and rotary direction of the motor (104).

For the asynchronous wired-transmission electric drive system driven by human generating power, the electronic control device (107) and the electric charging/discharging device (108) are further installed between the generator (102) and the motor (104).

Fig. 3 is a schematic view showing the structural block of an embodiment, in which the electronic control device (107) and the electric charging/discharging device (108) are installed to Fig.1; in which:
the electric charging/discharging device (108) is constituted by the rechargeable battery, or the capacitor, or ultra capacitor; and the electric charging/discharging device (108) is installed with an output interface, such as the plug, or the socket, or the wire connector, for receiving the external current charging the electric charging/discharging device (108), or for the electric charging/discharging device (108) supplying power externally; and
the electronic control device (107) is constituted by electromechanical components and/or solid state electronic components and/or the microprocessor with related operating software, for controlling the power operation among the generator (102), the motor (104) and the electric charging/discharging device (108), which includes one or more of the following operational functions:
   1) regulating the voltage and current transmitted to the motor (104) from the generator (102), and/or controlling the voltage and current input to the motor (104) to control the rotary speed, torque and rotary direction of the motor (104);
   2) controlling the voltage, current, rotary speed, torque and rotary direction of the motor (104) which is driven by the electric power from the electric charging/discharging device (108);
   3) controlling the voltage, current, rotary speed, torque and rotary direction of the motor (104) which is jointly driven by the generator (102) and the electric charging/discharging device (108);
   4) controlling the rotary direction relationship between the generator and the motor;
   5) controlling the voltage, current, rotary speed, torque and rotary direction of the motor (104) which is driven by the generator (102), and simultaneously controlling the charging time, charging voltage, charging current and charging cut-off time for the generator (102) to the electric charging/discharging device (108);
   6) controlling the charging voltage, charging current, charging start time and charging cut-off time for the generator (102) to the electric charging/discharging device (108); and
   7) controlling the charging start time, charging voltage, charging current and charging cut-off time for the power regenerated by the motor (104) to the electric charging/discharging device (108).

For the asynchronous wired-transmission electric drive system driven by human generating power, the front transmission (103) is further installed between the human-driven input device (101) and the generator (102), in which the front transmission (103) is a rotary gearing with constant or variable speed ratio, which is constituted by the gear, or the sprocket and chain, or the pulley and belt, or the connecting rod.

Fig. 4 is a schematic view showing the structural block of an embodiment, in which the front transmission (103) is installed to Fig. 1.

Fig. 5 is a schematic view showing the structural block of an embodiment, in which the front transmission (103) is installed to Fig. 2.

Fig. 6 is a schematic view showing the structural block of an embodiment, in which the front transmission (103) is installed to Fig. 3.

For the asynchronous wired-transmission electric drive system driven by human generating power, the rear transmission (106) is further installed between the motor (104) and the load (105), in which the rear transmission (106) is a rotary gearing with constant or variable speed ratio, which is constituted by the gear, or the sprocket and chain, or the pulley and belt, or the connecting rod.

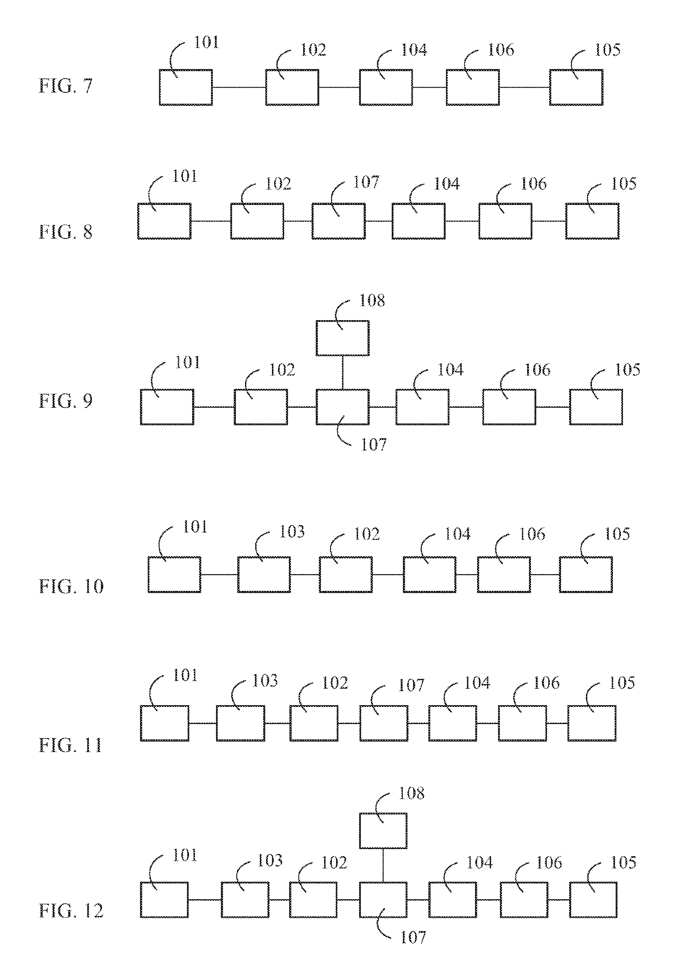

Fig. 7 is a schematic view showing the structural block of an embodiment, in which the rear transmission (106) is installed to Fig. 1.

Fig. 8 is a schematic view showing the structural block of an embodiment, in which the rear transmission (106) is installed to Fig. 2.

Fig. 9 is a schematic view showing the structural block of an embodiment, in which the rear transmission (106) is installed to Fig. 3.

For the asynchronous wired-transmission electric drive system driven by human generating power, the front transmission (103) is further installed between the human-driven input device (101) and the generator (102), and the rear transmission (106) is further installed between the motor (104) and the load (105), in which:
the front transmission (103) is a rotary gearing with constant or variable speed ratio, which is constituted by the gear, or the sprocket and chain, or the pulley and belt, or the connecting rod; and
the rear transmission (106) is a rotary gearing with constant or variable speed ratio, which is constituted by the gear, or the sprocket and chain, or the pulley and belt, or the connecting rod.

Fig. 10 is a schematic view showing the structural block of an embodiment, in which the front transmission (103) and the rear transmission (106) are installed to Fig. 1.

Fig. 11 is a schematic view showing the structural block of an embodiment, in which the front transmission (103) and the rear transmission (106) are installed to Fig. 2.

Fig. 12 is a schematic view showing the structural block of an embodiment, in which the front transmission (103) and the rear transmission (106) are installed to Fig. 3.

For the asynchronous wired-transmission electric drive system driven by human generating power, the gearing (109) is further installed between the human-driven input device (101) and the load (105), in which:
the gearing (109) is a rotary gearing with constant or variable speed ratio, which is constituted by the gear, or the sprocket and chain, or the pulley and belt, or the connecting rod, for being installed between the human-driven input device (101) and the load (105).

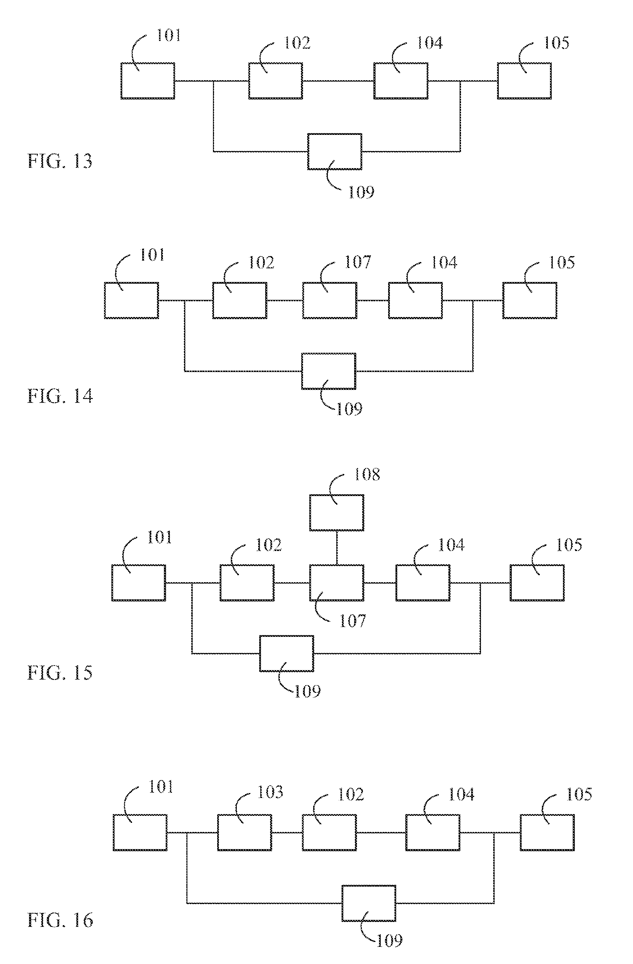

Fig. 13 is a schematic view showing the structural block of an embodiment, in which the gearing (109) is installed to Fig. 1.

Fig. 14 is a schematic view showing the structural block of an embodiment, in which the gearing (109) is installed to Fig. 2.

Fig. 15 is a schematic view showing the structural block of an embodiment, in which the gearing (109) is installed to Fig. 3.

For the asynchronous wired-transmission electric drive system driven by human generating power, the gearing (109) is further installed between the human-driven input device (101) and the load (105), and the front transmission (103) is further installed between the human-driven input device (101) and the generator (102), in which:
the front transmission (103) is a rotary gearing with constant or variable speed ratio, which is constituted by the gear, or the sprocket and chain, or the pulley and belt, or the connecting rod; and
the gearing (109) is a rotary gearing with constant or variable speed ratio, which is constituted by the gear, or the sprocket and chain, or the pulley and belt, or the connecting rod, for being installed between the human-driven input device (101) and the load (105).

Fig. 16 is a schematic view showing the structural block of an embodiment, in which the gearing (109) and the front transmission (103) are installed to Fig. 1.

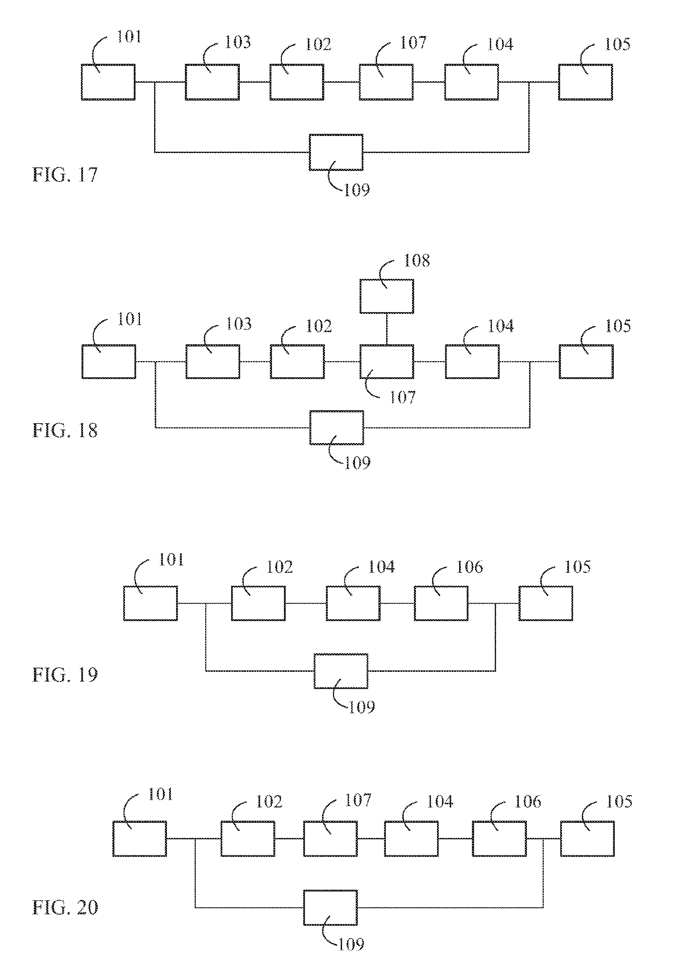

Fig. 17 is a schematic view showing the structural block of an embodiment, in which the gearing (109) and the front transmission (103) are installed in Fig. 2.

Fig. 18 is a schematic view showing the structural block of an embodiment, in which the gearing (109) and the front transmission (103) are installed to Fig. 3.

For the asynchronous wired-transmission electric drive system driven by human generating power, the gearing (109) is further installed between the human-driven input device (101) and the load (105), and the rear transmission (106) is further installed between the motor (104) and the load (105), in which:
the rear transmission (106) is a rotary gearing with constant or variable speed ratio, which is constituted by the gear, or the sprocket and chain, or the pulley and belt, or the connecting rod; and
the gearing (109) is a rotary gearing with constant or variable speed ratio, which is constituted by the gear, or the sprocket and chain, or the pulley and belt, or the connecting rod, for being installed between the human-driven input device (101) and the load (105).

Fig. 19 is a schematic view showing the structural block of an embodiment, in which the gearing (109) and the rear transmission (106) are installed to Fig. 1.

Fig. 20 is a schematic view showing the structural block of an embodiment, in which the gearing (109) and the rear transmission (106) are installed to Fig. 2.

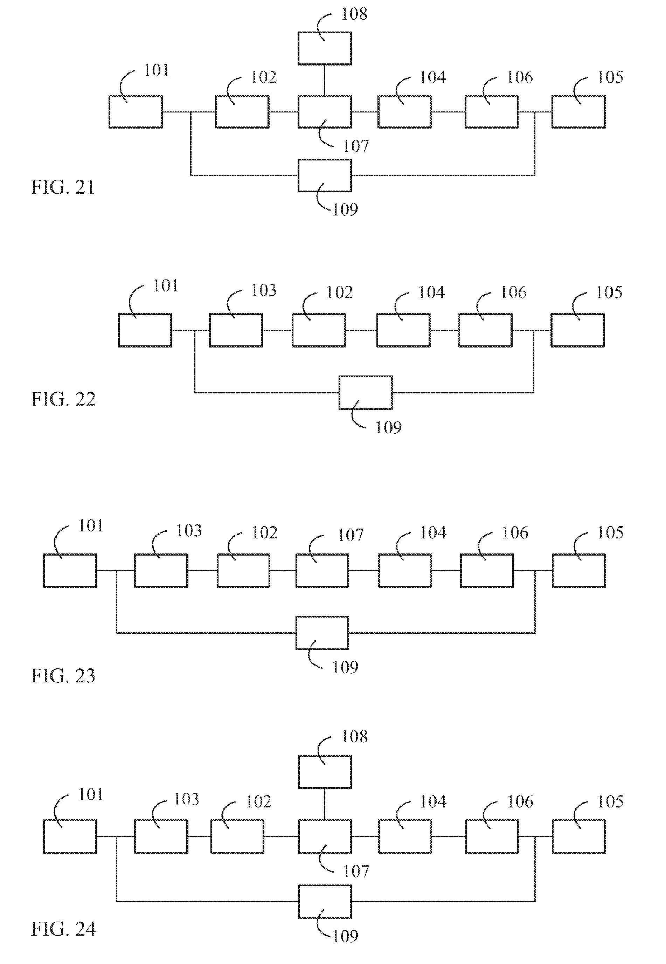

Fig. 21 is a schematic view showing the structural block of an embodiment, in which the gearing (109) and the rear transmission (106) are installed to Fig. 3.

For the asynchronous wired-transmission electric drive system driven by human generating power, the gearing (109) is further installed between the human-driven input device (101) and the load (105), the front transmission (103) is further installed between the human-driven input device (101) and the generator (102), and the rear transmission (106) is further installed between the motor (104) and the load (105), in which:
the front transmission (103) is a rotary gearing with constant or variable speed ratio, which is constituted by the gear, or the sprocket and chain, or the pulley and belt, or the connecting rod;
the rear transmission (106) is a rotary gearing with constant or variable speed ratio, which is constituted by the gear, or the sprocket and chain, or the pulley and belt, or the connecting rod; and
the gearing (109) is a rotary gearing with constant or variable speed ratio, which is constituted by the gear, or the sprocket and chain, or the pulley and belt, or the connecting rod, for being installed between the human-driven input device (101) and the load (105).

Fig. 22 is a schematic view showing the structural block of an embodiment, in which the gearing (109), the front transmission (103) and the rear transmission (106) are installed to Fig. 1.

Fig. 23 is a schematic view showing the structural block of an embodiment, in which the gearing (109), the front transmission (103) and the rear transmission (106) are installed to Fig. 2.

Fig. 24 is a schematic view showing the structural block of an embodiment, in which the gearing (109), the front transmission (103) and the rear transmission (106) are installed to Fig. 3.

For the asynchronous wired-transmission electric drive system driven by human generating power, the gearing (109) is further installed between the human-driven input device (101) and the load (105), and the controllable clutch device (110) is further installed between the human-driven input device (101) and the gearing (109), in which:
the gearing (109) is a rotary gearing with constant or variable speed ratio, which is constituted by the gear, or the sprocket and chain, or the pulley and belt, or the connecting rod, for being installed between the human-driven input device (101) and the load (105); and
the controllable clutch device (110) is a mechanism driven by human power, or machine power, or gas power, or hydraulic power, or electromagnetic force for link or release.

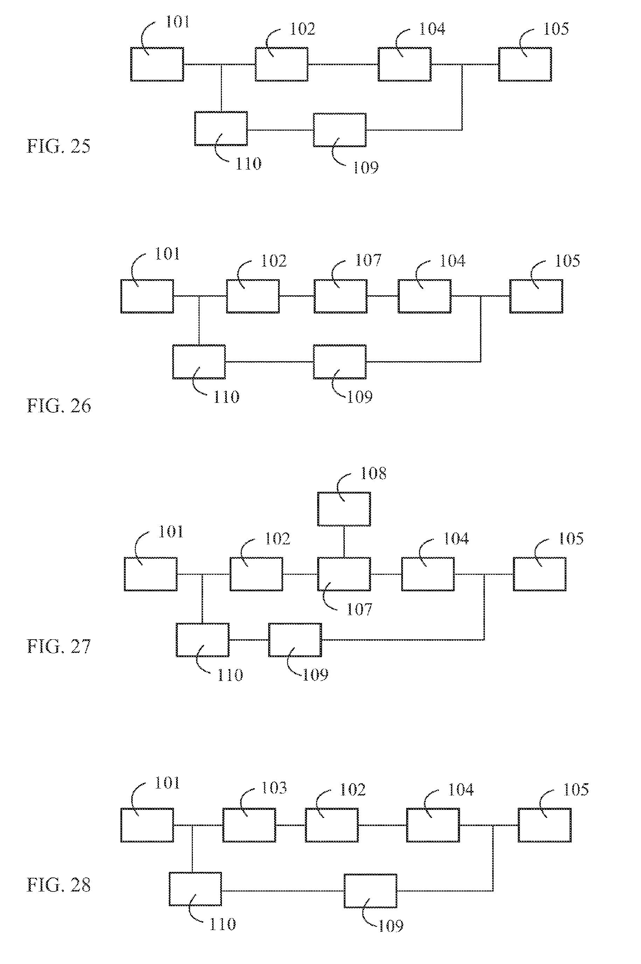

Fig. 25 is a schematic view showing the structural block of an embodiment, in which the controllable clutch device (110) is installed to Fig. 13 to control the human-driven input device (101) to couple or disconnect with the gearing (109).

Fig. 26 is a schematic view showing the structural block of an embodiment, in which the controllable clutch device (110) is installed to Fig. 14 to control the human-driven input device (101) to couple or disconnect with the gearing (109).

Fig. 27 is a schematic view showing the structural block of an embodiment, in which the controllable clutch device (110) is installed to Fig. 15 to control the human-driven input device (101) to couple or disconnect with the gearing (109).

For the asynchronous wired-transmission electric drive system driven by human generating power, the front transmission (103) is further installed between the human-driven input device (101) and the generator (102), the gearing (109) is further installed between the human-driven input device (101) and the load (105), and the controllable clutch device (110) is further installed between the human-driven input device (101) and the gearing (109), in which:
the front transmission (103) is a rotary gearing with constant or variable speed ratio, which is constituted by the gear, or the sprocket and chain, or the pulley and belt, or the connecting rod;
the gearing (109) is a rotary gearing with constant or variable speed ratio, which is constituted by the gear, or the sprocket and chain, or the pulley and belt, or the connecting rod, for being installed between the human-driven input device (101) and the load (105); and
the controllable clutch device (110) is a mechanism driven by human power, or machine power, or gas power, or hydraulic power, or electromagnetic force for link or release.

Fig. 28 is a schematic view showing the structural block of an embodiment, in which the controllable clutch device (110) is installed to Fig. 16 to control the human-driven input device (101) to engage or disengage with the gearing (109).

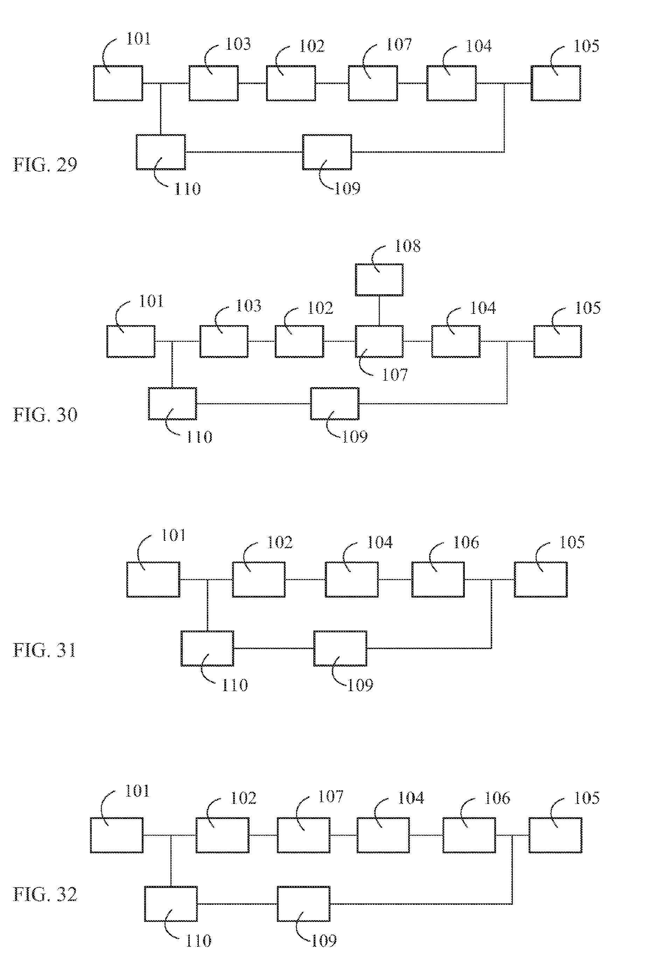

Fig. 29 is a schematic view showing the structural block of an embodiment, in which the controllable clutch device (110) is installed to Fig. 17 to control the human-driven input device (101) to engage or disengage with the gearing (109).

Fig. 30 is a schematic view showing the structural block of an embodiment, in which the controllable clutch device (110) is installed to Fig. 18 to control the human-driven input device (101) to engage or disengage with the gearing (109).

For the asynchronous wired-transmission electric drive system driven by human generating power, the rear transmission (106) is further installed between the motor (104) and the load (105), the gearing (109) is further installed between the human-driven input device (101) and the load (105), and the controllable clutch device (110) is further installed between the human-driven input device (101) and the gearing (109), in which:
the rear transmission (106) is a rotary gearing with constant or variable speed ratio, which is constituted by the gear, or the sprocket and chain, or the pulley and belt, or the connecting rod;
the gearing (109) is a rotary gearing with constant or variable speed ratio, which is constituted by the gear, or the sprocket and chain, or the pulley and belt, or the connecting rod, for being installed between the human-driven input device (101) and the load (105); and
the controllable clutch device (110) is a mechanism driven by human power, or machine power, or gas power, or hydraulic power, or electromagnetic force for link or release.

Fig. 31 is a schematic view showing the structural block of an embodiment, in which the controllable clutch device (110) is installed to Fig. 19 to control the human-driven input device (101) to engage or disengage with the gearing (109).

Fig. 32 is a schematic view showing the structural block of an embodiment, in which the controllable clutch device (110) is installed to Fig. 20 to control the human-driven input device (101) to engage or disengage with the gearing (109).

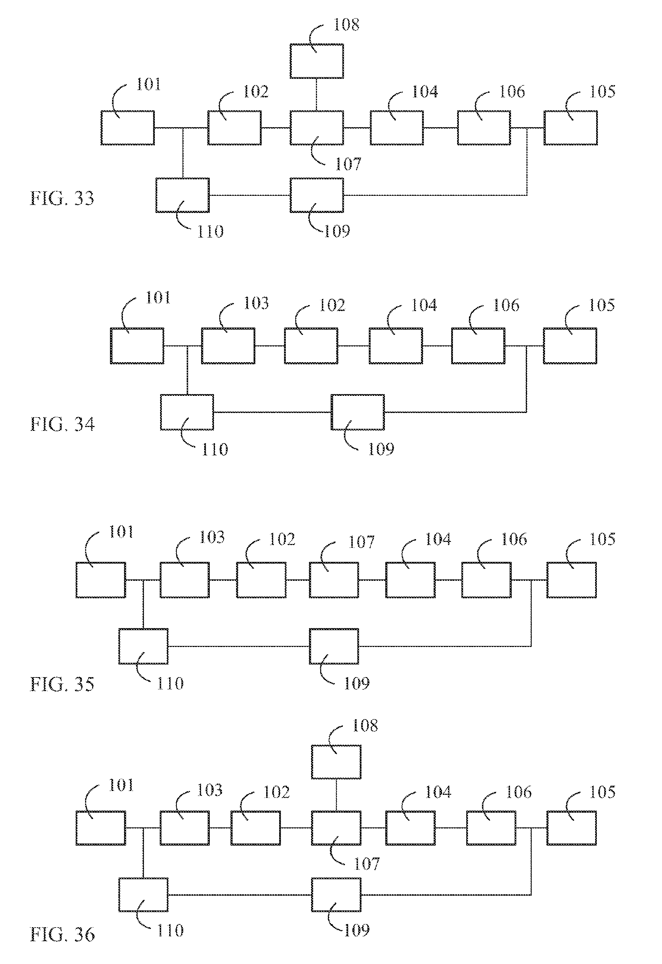

Fig. 33 is a schematic view showing the structural block of an embodiment, in which the controllable clutch device (110) is installed to Fig. 21 to control the human-driven input device (101) to engage or disengage with the gearing (109).

For the asynchronous wired-transmission electric drive system driven by human generating power, the front transmission (103) is further installed between the human-driven input device (101) and the generator (102), the rear transmission (106) is further installed between the motor (104) and the load (105), the gearing (109) is further installed between the human-driven input device (101) and the load (105), and the controllable clutch device (110) is further installed between the human-driven input device (101) and the gearing (109), in which:
the front transmission (103) is a rotary gearing with constant or variable speed ratio, which is constituted by the gear, or the sprocket and chain, or the pulley and belt, or the connecting rod;
the rear transmission (106) is a rotary gearing with constant or variable speed ratio, which is constituted by the gear, or the sprocket and chain, or the pulley and belt, or the connecting rod;
the gearing (109) is a rotary gearing with constant or variable speed ratio, which is constituted by the gear, or the sprocket and chain, or the pulley and belt, or the connecting rod, for being installed between the human-driven input device (101) and the load (105); and
the controllable clutch device (110) is a mechanism driven by human, or machine power, or gas power, or hydraulic power, or electromagnetic force for link or release.

Fig. 34 is a schematic view showing the structural block of an embodiment, in which the controllable clutch device (110) is installed to Fig. 22 to control the human-driven input device (101) to engage or disengage with the gearing (109).

Fig. 35 is a schematic view showing the structural block of an embodiment, in which the controllable clutch device (110) is installed to Fig. 23 to control the human-driven input device (101) to engage or disengage with the gearing (109).

Fig. 36 is a schematic view showing the structural block of an embodiment, in which the controllable clutch device (110) is installed to Fig. 24 to control the human-driven input device (101) to engage or disengage with the gearing (109).

The asynchronous wired-transmission electric drive system driven by human generating power relates to an onboard generator driven by human power, in which the generator is driven by human power, and the power generated by the generator directly and asynchronously drives a motor, so as to drive and control the rotary speed, rotary direction, torque, voltage and current of the motor, or to asynchronously drive and control the rotary speed, rotary direction, torque, voltage and current of the motor through the electronic control device, for applying to the load with the drive motor. According to one aspect of the present invention an asynchronous wired-transmission electric drive system comprising:
a manual power input device (101) arranged to be driven by human movement;
an electrical generator (102) connected to the manual power input device (101) so as to be driven by the manual power input device and generate output electric power; and
a motor (104) asynchronously driven by the output electric power of the generator (102) so as to directly or indirectly drive a load.

## Claims

1. An asynchronous wired-transmission electric drive system driven by human generating power, which is driven by human power, in which the feature is a generator driven by human power, and the power generated by the generator is used for driving a motor to drive a load; the main components including:
-- human-driven input device (101): driven by human limbs to produce rotary kinetic energy, to directly drive a generator (102), or to drive the generator (102) through variable speed transmission;
-- generator (102): constituted by the AC or DC generator, which is directly or via the front transmission unit (103) driven by the rotary kinetic energy of the human-driven input device (101) to produce and output electric energy; and
-- motor (104): constituted by the AC or DC motor, which is asynchronously driven by the electric energy of the generator (102), so as to produce and output the rotary mechanical energy to directly drive a load (105), or to drive the load (105) through variable speed transmission;
the relationship between the input rotary speed of the generator (102) and the asynchronous output rotary speed of the motor (104) includes directly matching through the features of voltage, current, rotary speed and torque of the both, or through the electronic control device installed between the power output terminal of the generator (102) and the power input terminal of the motor (104) to control the generated power of the generator and/or control the input power of the motor (104), therefore to control the rotary speed of the motor.

2. The asynchronous wired-transmission electric drive system driven by human generating power as claimed in Claim 1, in which the power control functions of the generator (102) to the motor (104) includes:
1) the power generated by the generator (102) drives the motor (104), in which when the motor (104) is activated, the regenerated power is prevented from feedback to the generator through the restriction of one-way conductive circuit device, such as diodes or thyristors, or through the switch operation; and/or
2) the power generated by the generator (102) drives the motor (104), in which when the motor (104) is activated, the regenerated power reversely drives the generator (102), so as to allow the generator produces the functional operation of the motor.

3. The asynchronous wired-transmission electric drive system driven by human generating power as claimed in Claim 1, in which the electric power generation and operational features of the generator (102) to the motor (104) includes one or more of the followings, including:
1) the electric power of the DC generator directly and asynchronously drives the DC motor; and/or
2) the electric power of the DC generator asynchronously drives the AC motor through an inverter; and/or
3) the electric power of the AC generator directly and asynchronously drives the AC motor; and/or
4) the electric power of the AC generator asynchronously drives the DC motor through an inverter; and/or
5) the rotary direction of the generator and that of the motor are in same rotary direction; and/or
6) the rotary direction of the generator and that of the motor are in different rotary direction; and/or
7) the rotary direction of the motor is constant and is irrelevant to that of the generator; and/or
8) the rotary direction of the motor is controlled by the electronic control device, and is irrelevant to that of the generator.

4. The asynchronous wired-transmission electric drive system driven by human generating power as claimed in Claim 1, in which the main components include:
-- human-driven input device (101): driven by human limbs to produce rotary kinetic energy, to directly drive the generator (102), or to drive the generator (102) through variable speed transmission;
-- generator (102): constituted by the AC or DC generator, which is driven by the rotary kinetic energy of the human-driven input device (101) to produce and output electric energy; and
-- motor (104): constituted by the AC or DC motor, which is asynchronously driven by the electric energy of the generator (102), so as to produce and output rotary mechanical energy to directly drive the load (105), or to drive the load (105) through variable speed transmission;
the relationship between the input rotary speed of the generator (102) and the asynchronous output rotary speed of the motor (104) includes directly matching through the features of voltage, current, rotary speed and torque of the both, or through the electronic control device installed between the power output terminal of the generator (102) and the power input terminal of the motor (104) to control the generated power of the generator and/or control the input power of the motor (104), therefore to control the rotary speed of the motor.

5. The asynchronous wired-transmission electric drive system driven by human generating power as claimed in Claim 1, the electronic control device (107) is further installed between the human-driven input device (101) and the motor (104), in which:
the electronic control device (107) is constituted by electromechanical components and/or solid state electronic components and/or the microprocessor with related operating software, to regulate the voltage and current transmitted to the motor (104) from the generator (102), and/or to control the voltage and
current input the motor (104), so as to control the rotary speed, torque and rotary direction of the motor (104).

6. The asynchronous wired-transmission electric drive system driven by human generating power as claimed in Claim 1, the electronic control device (107) and the electric charging/discharging device (108) are further installed between the generator (102) and the motor (104), in which:
the electric charging/discharging device (108) is constituted by the charging/discharging battery, or the capacitor, or ultra capacitor; and the electric charging/discharging device (108) is installed with an output interface, such as the plug, or the socket, or the wire connector, for receiving the external current charging the electric charging/discharging device (108), or for the electric charging/discharging device (108) supplying power externally; and
the electronic control device (107) is constituted by electromechanical components and/or solid state electronic components and/or the microprocessor with related operating software, for controlling the power operation among the generator (102), the motor (104) and the electric charging/discharging device (108), which includes one or more of the following operational functions:
1) regulating the voltage and current transmitted to the motor (104) from the generator (102), and/or controlling the voltage and current input to the motor (104) to control the rotary speed, torque and rotary direction of the motor (104);
2) controlling the voltage, current, rotary speed, torque and rotary direction of the motor (104) which is driven by the electric power from the electric charging/discharging device (108);
3) controlling the voltage, current, rotary speed, torque and rotary direction of the motor (104) which is jointly driven by the generator (102) and the electric charging/discharging device (108);
4) controlling the rotary direction relationship between the generator and the motor;
5) controlling the voltage, current, rotary speed, torque and rotary direction of the motor (104) which is driven by the generator (102), and simultaneously controlling the charging time, charging voltage, charging current and charging cut-off time for the generator (102) to the electric charging/discharging device (108);
6) controlling the charging voltage, charging current, charging start time and charging cut-off time for the generator (102) to the electric charging/discharging device (108); and
7) controlling the charging start time, charging voltage, charging current and charging cut-off time for the power regenerated by the motor (104) to the electric charging/discharging device (108).

7. The asynchronous wired-transmission electric drive system driven by human generating power as claimed in Claim 1, in which the front transmission (103) is a rotary gearing with constant or variable speed ratio, and is constituted by the gear, or the sprocket and chain, or the pulley and belt, or the connecting rod.

8. The asynchronous wired-transmission electric drive system driven by human generating power as claimed in Claim 1, in which the rear transmission (106) is a rotary gearing with constant or variable speed ratio, and is constituted by the gear, or the sprocket and chain, or the pulley and belt, or the connecting rod.

9. The asynchronous wired-transmission electric drive system driven by human generating power as claimed in Claims 4, 5 or 6, the gearing (109) is further installed between the human-driven input device (101) and the load (105), in which:
the gearing (109) is a rotary gearing with constant or variable speed ratio, and is constituted by the gear, or the sprocket and chain, or the pulley and belt, or the connecting rod, for being installed between the human-driven input device (101) and the load (105).

10. The asynchronous wired-transmission electric drive system driven by human generating power as claimed in Claims 4, 5 or 6, the gearing (109) is further installed between the human-driven input device (101) and the load (105), and the controllable clutch device (110) is further installed between the human-driven input device (101) and the gearing (109), in which:
the gearing (109) is a rotary gearing with constant or variable speed ratio, and is constituted by the gear, or the sprocket and chain, or the pulley and belt, or the connecting rod, for being installed between the human-driven input device (101) and the load (105); and
the controllable clutch device (110) is a mechanism driven by human power, or machine power, or gas power, or hydraulic power, or electromagnetic force for link or release.

11. The asynchronous wired-transmission electric drive system driven by human generating power as claimed in Claims 4, 5 or 6, the front transmission (103) is further installed between the human-driven input device (101) and the generator (102), the gearing (109) is further installed between the human-driven input device (101) and the load (105), and the controllable clutch device (110) is further installed between the human-driven input device (101) and the gearing (109), in which:
the front transmission (103) is a rotary gearing with constant or variable speed ratio, and is constituted by the gear, or the sprocket and chain, or the pulley and belt, or the connecting rod;
the gearing (109) is a rotary gearing with constant or variable speed ratio, and is constituted by the gear, or the sprocket and chain, or the pulley and belt, or the connecting rod, for being installed between the human-driven input device (101) and the load (105); and
the controllable clutch device (110) is a mechanism driven by human power, or machine power, or gas power, or hydraulic power, or electromagnetic force for link or release.

12. The asynchronous wired-transmission electric drive system driven by human generating power as claimed in Claims 4, 5 or 6, the rear transmission (106) is further installed between the motor (104) and the load (105), the gearing (109) is further installed between the human-driven input device (101) and the load (105), and the controllable clutch device (110) is further installed between the human-driven input device (101) and the gearing (109), in which:
the rear transmission (106) is a rotary gearing with constant or variable speed ratio, and is constituted by the gear, or the sprocket and chain, or the pulley and belt, or the connecting rod;
the gearing (109) is a rotary gearing with constant or variable speed ratio, and is constituted by the gear, or the sprocket and chain, or the pulley and belt, or the connecting rod, for being installed between the human-driven input device (101) and the load (105); and
the controllable clutch device (110) is a mechanism driven by human power, or machine power, or gas power, or hydraulic power, or electromagnetic force for link or release.

13. The asynchronous wired-transmission electric drive system driven by human generating power as claimed in Claims 4, 5 or 6, the front transmission (103) is further installed between the human-driven input device (101) and the generator (102), the rear transmission (106) is further installed between the motor (104) and the load (105), the gearing (109) is further installed between the human-driven input device (101) and the load (105), and the controllable clutch device (110) is further installed between the human-driven input device (101) and the gearing (109), in which:
the front transmission (103) is a rotary gearing with constant or variable speed ratio, and is constituted by the gear, or the sprocket and chain, or the pulley and belt, or the connecting rod;
the rear transmission (106) is a rotary gearing with constant or variable speed ratio, and is constituted by the gear, or the sprocket and chain, or the pulley and belt, or the connecting rod;
the gearing (109) is a rotary gearing with constant or variable speed ratio, and is constituted by the gear, or the sprocket and chain, or the pulley and belt, or the connecting rod, for being installed between the human-driven input device (101) and the load (105); and
the controllable clutch device (110) is a mechanism driven by human power, or machine power, or gas power, or hydraulic power, or electromagnetic force for link or release.
